Europäisches Patentamt

European Patent Office

Office européen des brevets

(11) Veröffentlichungsnummer: **0 149 224**
A2

(12) **EUROPÄISCHE PATENTANMELDUNG**

(21) Anmeldenummer: **84116180.5**

(22) Anmeldetag: **22.12.84**

(51) Int. Cl.⁴: **B 60 B 21/10**
**B 60 B 21/12, B 60 C 17/04**
**B 60 B 19/06**

(30) Priorität: **11.01.84 DE 3400649**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Janus, Jonny**
**Kreuzstrasse 53**
**D-4000 Düsseldorf 1(DE)**

(72) Erfinder: **Janus, Jonny**
**Kreuzstrasse 53**
**D-4000 Düsseldorf 1(DE)**

(74) Vertreter: **Gille, Christian, Dipl.-Ing. et al,**
**Redies , Redies, Türk & Gille Bruckner Strasse 20**
**D-4000 Düsseldorf 13(DE)**

(54) **Fahrzeugrad.**

(57) Ein Fahrzeugrad hat einen Radkörper, eine an diesem angeordnete ringförmige formstabile Felge und einen an der Felge angebrachten aufblasbaren elastischen Luft-Reifen, dessen Wulste in an der Innenseite der Felge befindliche ringförmige Vertiefungen eingreifen. Die Felge ist mit der im Betrieb sich einstellenden Flankenwölbung des Reifens angepaßten, wölbungsgleich ausgebildeten seitlichen Flanken versehen, zwischen denen eine sich über die gesamte Breite der Felge von Flanke zu Flanke erstreckende ringförmige Auflage vorgesehen ist, die dem Fahrzeugrad gute Notlaufeigenschaften verleiht. Die Wulsteinlagen des Luft-Reifens bedingen keine die Federwirkung seiner Seitenflanken beeinträchtigenden verdickten Wulste, sondern brauchen nur konstruktiv ausgebildet zu sein und die Cordfäden zu halten. Die Felge ist einstückig aus leichtem Material wie Kunststoff oder Aluminium geformt und kann ein Luftreservoir für unter erhöhtem Druck stehende, bei Bedarf in den Luft-Reifen automatisch nachzufüllende Druckluft bilden.

FIG.2

EP 0 149 224 A2

G54838

Jonny Janus, Kreuzstr. 53, 4000 Düsseldorf 1

## Fahrzeugrad

Die Erfindung betrifft ein Fahrzeugrad, das aus einem die
Nabe aufweisenden Radkörper, einer am Radkörper angeordneten
ringförmigen formstabilen Filge und einem an der Felge angebrachten aufblasbaren Luft-Reifen aus elastischem Material,
der in an der Innenseite der Felge befindliche ringförmige
Vertiefungen eingreifende   Wulste aufweist, besteht.

Ein Fahrzeugrad dieser Art ist aus der DE-OS 32 04 676 bekannt.
Da die Felge lösbar am Radkörper angebracht ist, kann sie
zusammen mit dem Luft-Reifen ausgetauscht werden. Die Seitenflanken des elastischen Luft-Reifens zeigen eine gute Federwirkung, da keine kräftigen Wulste für die Befestigung des
Luft-Reifens an der Felge benötigt werden. Dementsprechend
läßt sich der Luft-Reifen flacher ausführen. Bei diesem bekannten
Fahrzeugrad hat man jedoch keine besonderen Vorkehrungen zum
Erzielen einer Seitenstabilität des Luft-Reifens getroffen,
die insbesondere für Kurvenfahrten wichtig ist. Auch hat dieses
vorbekannte Fahrzeugrad keine Notlaufeigenschaften, die heute
vielfach gefordert werden.

Ein Fahrzeugrad mit Notlaufeigenschaften für den Fall, daß der
Luftdruck aus dem Luft-Reifen entweicht, ist aus der DE-OS
30 19 742 bekannt. Bei diesem Fahrzeugrad hat die Felge einen
im Inneren des Luft-Reifens befindlichen ringförmigen Außenkörper mit erhöhtem Mittelteil, auf welchem sich die Lauffläche
des Luft-Reifens in Notfällen abstützt, nämlich wenn die Luft
aus dem Reifen entwichen sein sollte. Diese Notlauf-Auflagefläche ist jedoch verhältnismäßig schmal. Zum Erzielen der
Seitenstabilität der Flanken des Luft-Reifens sind verdickte,
und steife Wulste vorgesehen, welche bis weit in die Flanken

.../2

des Reifens hineinreichen, so daß sie deren Federeigenschaft beeinträchtigen, die Querschnittsfläche der Reifenflanken vergrößern und damit zusätzliches Gewicht und Kosten verursachen.

Der Erfindung liegt die Aufgabe zugrunde, das aus der DE-OS 32 04 676 bekannte Fahrzeugrad derart zu verbessern, daß der Luft-Reifen problemlos an der Felge montiert und auch von dieser entfernt werden kann, eine verbesserte Seitenstabilität ohne Beeinträchtigung der Federwirkung und damit des Fahrkomforts erhält und das Fahrzeugrad gute Notlaufeigenschaften aufweist.

Diese Aufgabe wird erfindungsgemäß bei einem Fahrzeugrad der eingangs genannten Gattung dadurch gelöst, daß die Felge der sich bei normaler Belastung des Luft-Reifens einstellenden Wölbung der Reifen angepaßt gewölbte Flanken aufweist, welche sich über einen Teil der Höhe der Reifenflanken erstrecken und diese abstützen, während zwischen diesen Flanken auf der Außenseite der Felge eine durchgehende ringförmige Auflagefläche vorgesehen ist, auf welcher sich die Lauffläche des Luft-Reifens abstützen kann, wenn Notlaufverhältnisse vorliegen und der Luftdruck aus dem Reifen entwichen ist.

Erfindungsgemäß ist die Felge also so ausgebildet, daß sie die Seitenflanken des Luft-Reifens auf einem Teil ihrer Höhe gegen nach innen gerichtete Querbeschleunigungskräfte abstützt und dem Luft-Reifen im inneren Bereich zwangsweise die Form gibt, welche seine Seitenflanken bei normaler Belastung einnehmen. Dementsprechend kann der Luft-Reifen im Bereich seiner Seitenflanken dünnwandiger als üblich ausgebildet werden, so daß er insgesamt weicher federt und sich insbesondere beim Kurvenfahren durch die seitliche Abstützung geringere Schräglaufwinkel einstellen. Die auf der Außenseite der Kurve befindliche Seitenflanke des Luft-Reifens wird von der betreffenden gewölbten Flanke der Felge bis zu deren Oberkante, die nach innen abgerundet sein kann, abgestützt und somit seitlich geführt, während die gegenüberliegende Seitenflanke des Luft-Reifens sich von der entsprechenden Flanke der Felge abhebt. Durch die sich über die gesamte Breite der Felge auf deren Außenseite erstreckende ringförmige Auflage werden die Notlaufeigenschaften des Fahrzeugrades wesentlich verbessert.

Vorzugsweise hat die Felge eine der Form des Innenprofils/ des abgeplatteten Luft-Reifens entsprechende Umfangsfläche oder Auflagefläche, so daß der Luft-Reifen in Notlauffällen im Kontaktbereich mit der Felge keine ihn zerstörenden Verformungen erfährt und außerdem seitlich exakt geführt ist.

Nach noch einem weiteren Merkmal der Erfindung kann die Felge auf ihrer Außenseite keilförmige Vertiefungen wie umlaufende Nuten aufweisen, in die an der Innenseite des Luft-Reifens befindliche Vorsprünge wie Noppen eingreifen können. Auf diese Weise wird der Luft-Reifen in Notlauffällen gegenüber der Felge zentriert, d.h. er kann wegen der in die Nuten eingreifenden Noppen nicht seitlich verrutschen, so daß bei abgeplattetem Reifen auch mit höheren Geschwindigkeiten sicher/ gefahren werden kann.

Erfolgt
das Abplatten des Reifens beispielsweise bei einer Kurvenfahrt, so werden die Noppen des Luft-Reifens spätestens dann in die keilförmigen Vertiefungen der Felge eingreifen, wenn das Rad wieder gerade läuft.

Gemäß einer praktischen Ausführungsform der Erfindung ist die Felge im Querschnitt als Profilkörper mit gewölbten Flanken und einer sich über die gesamte Breite der Felge von Flanke zu Flanke erstreckenden ringförmigen Auflagefläche für den abgeplatteten Luft-Reifen ausgebildet, wobei dieser Profilkörper nach außen oder nach innen offen sein kann. Im erstgenannten Fall ist auf der Außenseite eine die Notlaufauflagefläche bildende ringförmige Abdeckung vorgesehen, während im letztgenannten Fall die Verbindung zwischen den wölbungsgleichen seitlichen Flanken der Felge die Auflagefläche für den abgeplatteten Luft-Reifen bildet.

Der Luft-Reifen läßt sich leicht an den auf der Innenseite
der ringförmigen Felge angeordneten umlaufenden ringförmigen
Vertiefungen montieren, denn die Wulsteinlagen des Luft-Reifens
können begrenzt kompressibel und dehnbar sein und brauchen
keine geschlossenen Ringe zu sein, sondern können aus stumpf
aneinanderstoßenden oder sogar einander leicht überlappenden
Drahtstücken oder dergleichen bestehen, weil die Felge alle
auftretenden Zugkräfte der Wulstringe aufnehmen kann, denn
der Durchmesser der in die ringförmige Vertiefung eingepreßten
Wulste ist größer als die Außenkante der ringförmigen Vertiefungen selbst. Die unter Druckspannung stehenden Wulstkerne
drücken sich daher selbst in die an der Felge hierfür vorgesehenen Vertiefungen. Selbst in Notlauffällen ist nicht zu
befürchten, daß sich der Luft-Reifen vom verhältnismäßig starren
Felgenring löst, obwohl seine Wulste nur verhältnismäßig geringen
Querschnitt aufweisen und keine in die Seitenflanken des Luft-
Reifens hineinreichende Verdickungen erfordern.

Gemäß einer bevorzugten praktischen Ausführungsform der Erfindung ist die ringförmige Felge mit ihren gewölbten seitlichen Flanken und den dazwischen angeordneten Rippen aus
gieß- oder spritzfähigem Material einstückig geformt, beispielsweise aus Kunststoff oder Aluminium gespritzt. Dadurch ist
die Fertigung in einer präzisen Form oder mit einem präzisen
Werkzeug möglich, so daß man die Felge äußerst formgetreu
herstellen kann. Somit erhält man eine leichte, preiswerte und
gleichförmige, d.h. unwuchtfreie Felge, die auch äußerst verwindungssteif ist, insbesondere wenn die für die Notlaufeigenschaften des Rades vorgesehene ringförmige bzw. hülsenförmige
Auflage auf den gewölbten Flanken und Rippen des Felgenringes
dauerhaft befestigt ist. Nach Abnutzen des an der Felge angebrachten Luft-Reifens werden Felge und Luft-Reifen vom Radkörper entfernt und gegen eine neubereifte Felge ausgetauscht.
Die abgebaute Felge kann wiederverwendet werden. Zumindest
läßt sich ihr Material rückgewinnen, beispielsweise durch

.../5

Zerkleinern der aus Kunststoff bestehenden Felge zu Granulat
als Vormaterial für eine Strangpresse oder durch Einschmelzen
der aus Aluminium bestehenden Felge.

Die für die Notlaufeigenschaften vorgesehene Auflage kann
ein biegsamer Ring bzw. eine biegsame Hülse sein und besteht
beispielsweise aus Kunststoff oder dünnem Metallblech.

Nach einem weiteren Merkmal der Erfindung bildet die Felge
mit der auf ihr befestigten Auflage einen luftdichten Tank,
der als Druckmittelreservoir für den Luft- Reifen dienen kann
und mit Einlaß- und Auslaßventilen für Druckluft versehen ist.
Die Ventile können wenigstens teilweise druckeinstellbar ausgebildet sein, so daß bei Absinken des Luftdruckes im Luft-
Reifen unter einen bestimmten Wert Druckluft in den Reifen
nachströmt, während bei Ansteigen des Luft-Druckes im Reifen
über einen bestimmten Wert Druckluft nach außen abströmen
kann und somit eine Druckentlastung stattfindet. Auf diese
Weise kann man im Luft-Reifen einen gleichförmigen Luftdruck
aufrecht erhalten, d.h. der Luftdruck im Reifen ändert sich
nicht bei Temperaturschwankungen, sondern wird stets selbsttätig
ausgeglichen. Somit herrscht im Luft-Reifen in der kalten
und auch in der warmen Jahreszeit, im Stillstand oder nach
längeren Fahrten immer der gleiche und richtige Luftdruck.

Gemäß noch einem anderen Merkmal der Erfindung weisen die
gewölbten Flanken der Felge und damit auch deren Rippen eine
Höhe auf, die etwa einem Drittel bis etwa zwei Dritteln der
Höhe der Seitenflanken des Luft-Reifens entspricht. Vorzugsweise sind die gewölbten Flanken etwa halb so hoch wie die
Seitenflanken des Luft-Reifens, so daß dieselben etwa auf
ihrer halben Höhe von der Felge seitlich abgestützt werden.

In der Zeichnung sind Ausführungsbeispiele des erfindungsgemäßen Fahrzeugrades schematisch dargestellt, und zwar zeigt

.../6

Fig. 1  einen senkrechten Schnitt durch das Fahrzeugrad mit
darauf lösbar angebrachter ringförmiger Felge und an
dieser gehaltenem Luft-Reifen, der im abgeplatteten
Zustand, d.h. beim Notlauf dargestellt ist,

Fig. 2  einen Schnitt ähnlich wie in Fig. 1 einer an deren
Ausführungsform, wobei der aufgeblasene Luft-Reifen
in vollen Linien unbelastet und strichpunktiert bei
normaler Belastung dargestellt ist,

Fig. 3  einen Schnitt ähnlich wie in Fig. 2, woraus das Verhalten des Luft- Reifens beim Kurvenfahren zu erkennen
ist,

Fig. 4  einen Schnitt wie in Fig. 1 oder einer weiteren abgewandelten Ausführungsform der ringförmigen Felge und

Fig. 5  einen im Maßstab vergrößerten Teilschnitt, woraus die
Lage eines der beiden Wulste des Luft-Reifens in der
dafür vorgesehenen ringförmigen Vertiefung der Felge
zu erkennen ist.

Das Fahrzeugrad 1
hat einen Radkörper 2, der beispielsweise sternförmig oder
auch scheibenförmig ausgebildet ist und am Außenumfang eine
ringförmige Felge 3 aufweist, die lösbar an ihm befestigt ist.
Die Felge 3 ist zu diesem Zweck mit einem nach innen vorstehenden ringförmigen Flansch 4 versehen, der Löcher 5 zum Durchstecken von nicht dargestellten Befestigungselementen wie
Schrauben enthält, mit deren Hilfe die Felge 3 am Radkörper 2
lösbar befestigt wird.

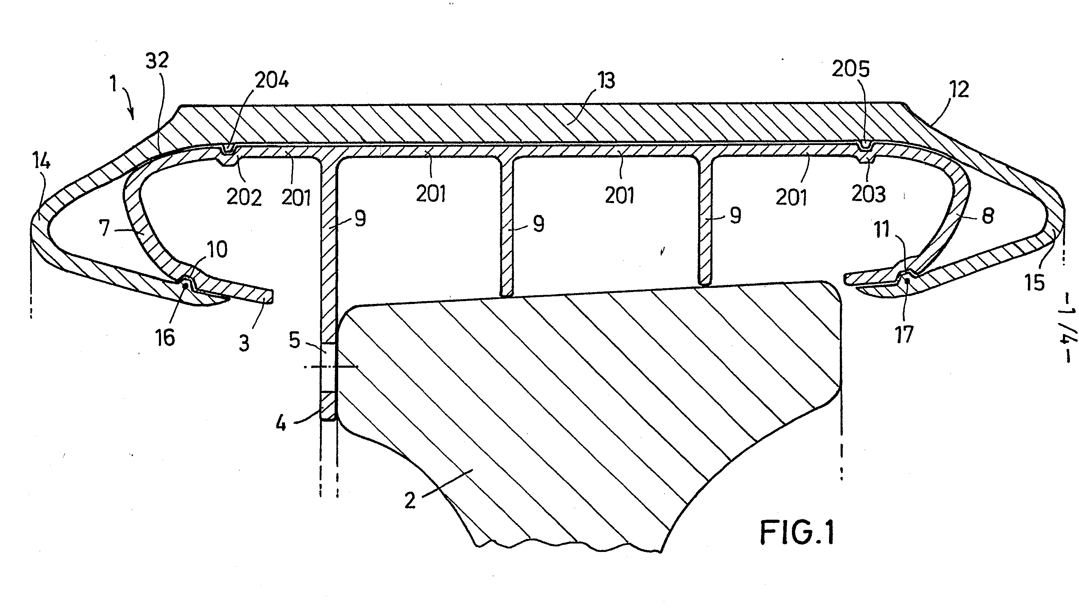

Gemäß Fig. 1 ist die Felge 3 als nach innen offener Profilkörper
ausgebildet, der gewölbte seitliche Flanken 7 und 8 und eine
durchgehende Außenseite 201 aufweist. Im Inneren des Profilkörpers befinden sich senkrecht verlaufende Rippen 9, die als Aussteifungselemente dienen.

Auf dieser Felge 3 ist ein Luft-Reifen 12 aus elastischem Material montiert, der mit nahe den Enden seiner Seitenflanken 14 und 15 befindlichen Wulsten 16 und 17 in an der Innenseite der Felge 3 befindliche umlaufende Nuten 10 und 11 eingreift. Die Flanken 7 und 8 der Felge 3 sind wölbungsgleich, jedoch spiegelbildlich gewölbt und gehen kurvenförmig in die Außenfläche 201 der Felge 3 über. In dieser Außenfläche befinden sich ringförmige, im Querschnitt keilförmig ausgebildete Nuten 202 und 203, in welche an der Innenseite der Lauffläche 13 des Luft-Reifens 12 befindliche Noppen 204 bzw. 205 eingreifen können, wenn der in Fig. 1 dargestellt Notlauf gegeben ist.

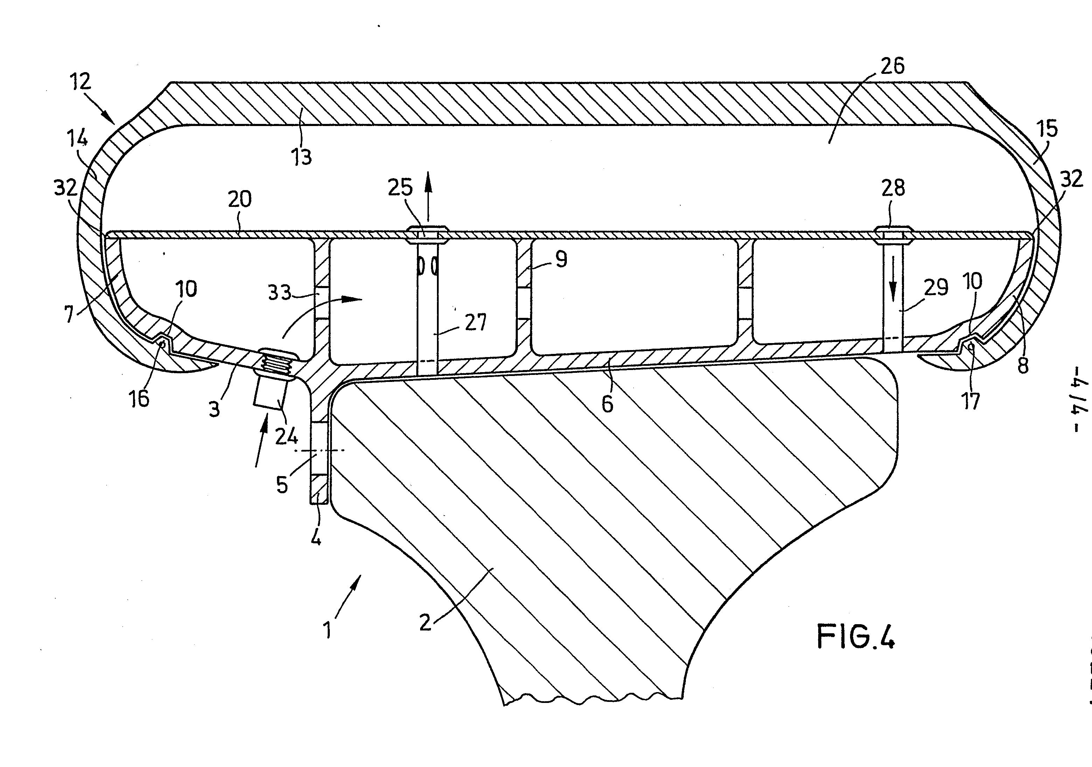

Die in Fig. 1 dargestellte Felge kann in einem Stück in Kunststoff oder Metall wie Leichtmetall gespritzt sein. Die Flanken 7 und 8 können auf der Außenseite mit einem Gleitmittel belegt sein, beispielsweise eine nicht näher dargestellte Auflage aus Teflon, Silikon und dergleichen, um die Reibung zwischen den Seitenflanken 14 und 15 des Luft-Reifens 12 und der Felge 3 so gering wie möglich zu halten. Auch kann die nach innen offene Felge 3 mit einem hier nicht dargestellten Ring verschlossen sein, um das Eindringen von Schmutz und Feuchtigkeit zu verhindern und/oder den Innenraum der Felge 3 anderweitig nutzen zu können, beispielsweise als Luftreservoir, was unten in Verbindung mit Fig. 4 näher erläutert ist.

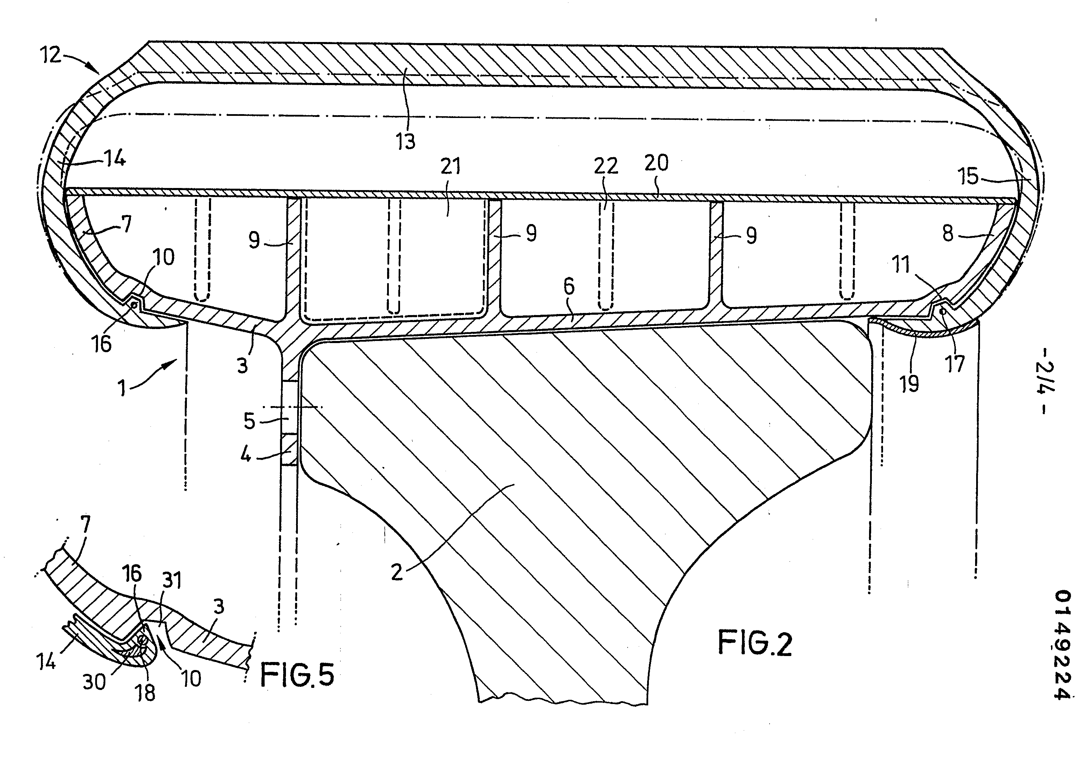

Die ringförmige Felge 3 hat gemäß Fig. 2 einen schalenförmigen Quer-schnitt mit etwa axial verlaufendem Boden 6 und gewölbt hochgezogenen seitlichen Flanken 7 und 8. Zwischen den Flanken 7 und 8 sind in Umfangsrichtung der Felge 3 verlaufende Rippen 9 vorgesehen, deren Höhe etwa der der Flanken 7 und 8 entspricht.

An der Innenseite der Felge 3 sind etwa am Übergang vom Boden 6

...../8

zu den hochgezogenen Flanken 7 und 8 sich nach innen öffnende
Nuten 10 und 11 vorgesehen, die zur Aufnahme der Wulste eines
an der Felge 3 lösbar anzubringenden Luft-Reifens 12 dienen.
Der aus elastischem Material bestehende Luft-Reifen 12 hat
eine verstärkte Lauffläche 13 und verhältnismäßig dünnwandige
Seitenflanken 14 und 15, die bei den dargestellten Ausführungsbeispielen sich bis etwa in halbe Höhe an die hochgezogenen
Flanken 7 und 8 der Felge 3 legen, wenn der Reifen 12 aufgeblasen und wenn er normal belastet ist. Nahe den Enden der
Seitenflanken 14 und 15 sind diese an ihrer Innenseite mit
einen verhältnismäßig geringen Querschnitt aufweisenden Wulsten
16 bzw.17 versehen, welche sich in die Nuten 10 bzw. 11 legen,
wenn der Reifen 12 and der Felge 3 angebracht und aufgeblasen
ist. Die Wulste enthalten jeweils aus Draht oder Drahtstücken
oder dergleichen bestehende Einlagen 18, welche dem Wulst
eine ausreichende Festigkeit geben und als Lager für die Cordfadenschlingen der Karkasse wirken und gewährleisten, daß der
Wulst unter Einfluß seiner Einbaubedingungen, des im Reifen 12
herrschenden Luftdruckes und sonstiger Beanspruchungen des
Reifens nicht aus der betreffenden Nut 10 bzw. 11 herausgezogen
wird. Es ist erkennbar, daß die ringförmigen Wulste 16 und 17
keine die Wandstärke der Seitenflanken 14 und 15 beeinträchtigende Verdickung des Luft-Reifens hervorrufen.

Das Ende jeder Seitenflanke 14 und 15 kann, wie in Fig. 1 rechts
dargestellt, im Bereich des Wulstes 16 bzw. 17 von einem ringförmigen Schutzband 19 abgedeckt werden, das zur Stabilisierung
der Verbindung zwischen Luft-Reifen 12 und Felge 3 und auch
zum Schutz gegen thermische und mechanische Belastungen des
Luft-Reifens 12, welche sich beispielsweise durch Erwärmung
der in der Nähe befindlichen Bremsen ergeben können, dient.

In Fig. 1 ist der Luft-Reifen 12 in vollen Linien im aufgeblasenen, sonst aber unbelasteten Zustand gezeigt, während in strichpunktierten Linien die Form des Luft-Reifens 12 angedeutet ist,

.../9

die er einnimmt, wenn er normal belastet ist, d.h. bei leichter
Abplattung. Es ist zu erkennen, daß sich die Seitenflanken 14
und 15 im nicht von den Flanken 7 und 8 der Felge 3 abgestützten
Bereich seitlich ausbeulen und somit durch die Federung über
die gesamte Höhe der Flanken die für einen guten Fahrkomfort
gewünschte Federwirkung zeigen, während sie im Bereich der
Felge 3 von deren gewölbten Flanken 7 und 8 abgestützt sind,
so daß der Reifen 12 die notwendige Seitenstabilität hat.

Auf dem Außenumfang der Felge 3 liegt eine ringförmige bzw.
zylindrische oder hülsenförmige Abdeckung 20, welche aus biegsamem bis mehr oder weniger elastischem Material wie beispielsweise Kunststoff oder Metallblech bestehen kann und die Felge 3
nach außen schließt. Die Abdeckung 20 ist auf den gewölbten
Flanken 7 und 8 und den Rippen 9 der Felge 3 dauerhaft befestigt
und kann zwischen den Flanken 7 und 8 und den Rippen 9 mit
Querrippen 21 und ggfs. Längsrippen 22 versehen sein, welche
die Abdeckung gegen den Boden 6 der Felge 3 abstützen und mit
dem Boden 6 und den Rippen 9 verbunden sein können. Wegen dieser
dreidimensionalen Aussteifung erhält die Felge eine extrem
hohe Festigkeit gegen Verformung, ist andererseits aber wegen
der möglichen geringen Wandstärke nicht schwer.

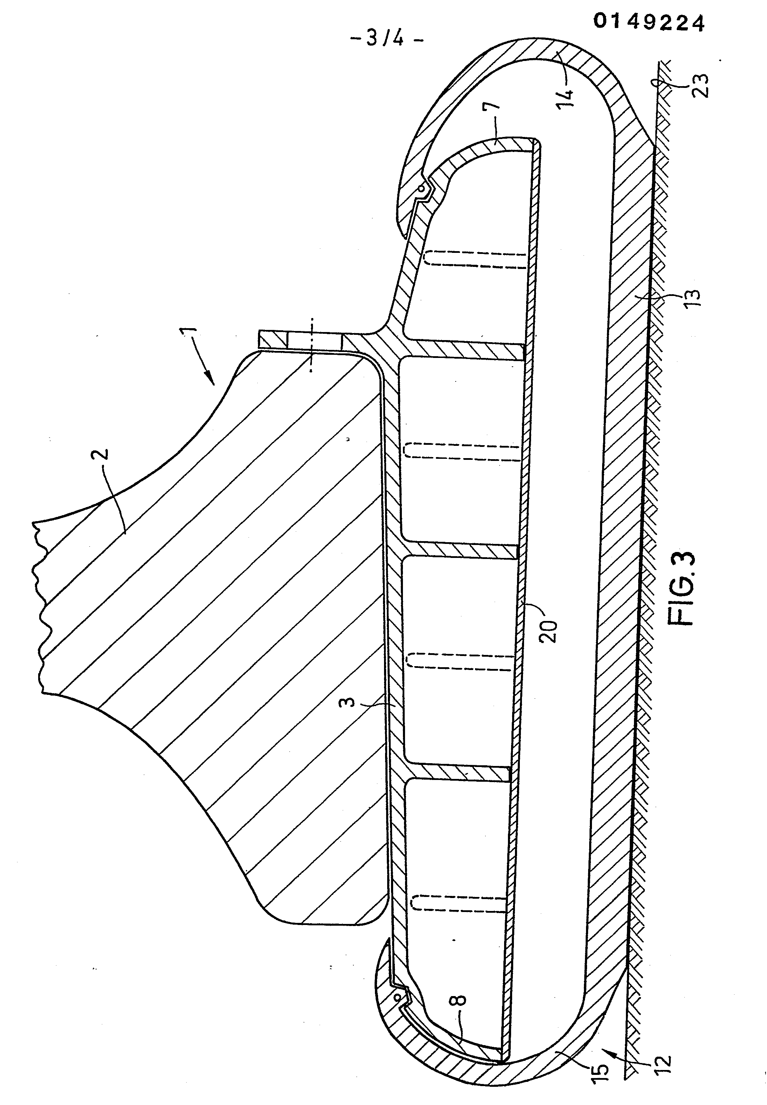

Fig. 3 zeigt, wie sich der Reifen 12 beim Kurvenfahren verhält.
Der Reifen 12 liegt mit seiner verstärkten Lauffläche 13 auf
der Fahrbahn 23 auf und verformt sich derart, daß die Seitenflanke 15 an der Außenseite der Kurve sich an der Flanke 8
der Felge 3 abstützt, während die Seitenflanke 14 sich von
der gegenüberliegenden Flanke 7 der Felge 3 abhebt. Der Luft-
Reifen 12 behält dadurch die erforderliche Seitenstabilität,
zugleich aber auch die für hohen Fahrkomfort gewünschte radiale
Federung.

Die hochgezogenen Flanken 7 und 8 sind wölbungsgleich ausgebildet und können zur Verringerung der Reibung zu den Seitenflanken 14 und 15 des Luft-Reifens 12 mit einem Gleitmittel wie Teflon,
Silikon und dergleichen beschichtet sein. Die Flanken 7 und 8
bewirken eine Zwangsformung der Seitenflanken 14 und 15 des
aufgeblasenen Reifens 12 in die Form, welche die Seitenflanken
bei normal abgeplattetem oder belastetem Reifen einnehmen. Man
erzielt auf diese Weise eine große Flankensteifigkeit gegen
Querkräfte, hält jedoch die Federwirkung des Reifens in senkrechter Richtung aufrecht. Die Oberfläche der Flanken 7 und 8
kann mit einer Rillenstruktur versehen sein, um Lufteinschlüsse
im Flankenbereich mit Sicherheit zu vermeiden.

Bei der in Fig. 4 gezeigten Ausführungsform ist die Felge 3
mit der Abdeckung 20 zu einem luftdichten Tank verbunden, der
ein Druckluftreservoir bildet, um im Luft-Reifen 12 einen stets
gleichen Luftdruck aufrecht zu erhalten. Beispielsweise kann
in dem aus der Felge gebildeten Lufttank Luft mit einem Druck
von 10 bar gespeichert werden, während der gewünschte Reifendruck beispielsweise 1,8 bar beträgt. In den Rippen 9 befinden
sich Öffnungen 33, um die einzelnen Kammern des Lufttankes
untereinander zu verbinden.

Für diesen Zweck ist die Felge 3 mit einem an eine Druckluftquelle anzuschließenden Einlaßventil 24 versehen und mit einem
druckeinstellbaren Auslaßventil 25, das in den Innenraum 26
des Luft-Reifens 12 führt und durch ein bis durch den Boden 6
der Felge 3 ragendes Rohr 27 von außen eingestellt werden kann.
Ferner ist ein druckeinstellbares Auslaßventil 28 vorgesehen,
das über ein Rohr 29 sich durch den Boden 6 der Felge 3 nach
außen öffnet.

Das Auslaßventil 25 kann so eingestellt werden, daß es sich
öffnet, sobald der Druck im Innenraum 26 des Luft-Reifens 12
unter 1,8 bar sinkt, damit aus dem Druckluftreservoir Druckluft
nachströmt. Steigt der Luftdruck im Innenraum über 1,8 bar,
wird das Ventil 25 geschlossen und das Auslaßventil 28 geöffnet, damit sich kein schädlicher Überdruck im Innenraum 26 aufbaut.
Die Schwellenwerte für das Öffnen und Schließen der Ventile
25 und 28 können etwas unter bzw. über 1,8 bar liegen, damit
sich die beiden Ventile nicht ständig öffnen und schließen.

Fig. 4 zeigt, daß die Drahteinlagen 18 der ringförmig ausgebildeten Wulste 16 und 17 mit etwa keilförmigen Kern-reitern 30
versehen sein
können, welche eine gute Umführung der in der Zeichnung nicht
dargestellten Cordfäden gewährleisten. Die ringförmigen Wulste
16 und 17 sind bei dieser Ausführungsform im Querschnitt als
keilförmige spitze Lippen ausgebildet, was die Montage wegen der
günstigen Kompressibilität erleichtert. Nach der Montage kann der
freie Raum 31 der Nuten 10 bzw. 11 mit Dichtmaterial ausgespritzt
und ggfs. mit dem Schutzband 19 abgedeckt werden.

Wie Fig. 1 und 4 zeigen, ist der Übergang 32 zwischen den gewölbten Flanken 7 und 8 und der darauf befindlichen Abdeckung 20
bzw. 21 abgerundet, um ein Abknicken der Seitenflanken 14 und
15 des Luft-Reifens 12 über die äußeren Ränder der Felge 3
zu verhindern.

G54838    —    Jonny Janus, Kreuzstr. 53, 4000 Düsseldorf 1

Patentansprüche
_____

1. Fahrzeugrad, mit einem Radkörper, einer an diesem angeordneten ringförmigen formstabilen Felge und mit einem an der Felge angebrachten aufblasbaren Luft-Reifen aus elastischem Material, der in an der Innenseite der ringförmigen Felge befindliche ringförmige Vertiefungen eingreifende Wulste aufweist, d a d u r c h   g e k e n n z e i c h n e t, daß die Felge (3) der sich bei normaler Belastung des Luft-Reifens (12) einstellenden Wölbung der Seitenflanken (14,15) des Luft-Reifens angepaßt gewölbte Flanken (7,8) aufweist, welche sich über einen Teil der Höhe der Seitenflanken (14,15) erstrecken und diese abstützen, und daß zwischen den gewölbten Flanken (7,8) auf der Außenseite der Felge (3) eine durchgehende ringförmige Auflagefläche (20;201) vorgesehen ist.

2. Rad nach Anspruch 1, dadurch gekennzeichnet, daß die Felge (3) eine der Form des Innenprofils des/abgeplatteten Luft-Reifens (12) entsprechende Umfangsfläche (201) aufweist.

3. Rad nach Anspruch 1 oder 2, dadurch gekennzeichnet, daß die Felge (3) auf ihrer Außenseite (201) Vertiefungen (202,203) wie umlaufende Nuten enthält, in die an der Innenseite des Luft-Reifens (12) befindliche Vorsprünge (204,205) wie Noppen eingreifen können.

4. Rad nach einem der Ansprüche 1 bis 3, dadurch gekennzeichnet, daß die Felge (3) im Querschnitt ein Profilkörper mit gewölbten Flanken (7,8) und einer sich über die gesamte Breite der Felge von Flanke zu Flanke erstreckenden ringförmigen Auflagefläche (20;201) für den abgeplatteten Luft-Reifen (12) ist.

.../2

- 2 -                                   0149224

5. Rad nach Anspruch 4, dadurch gekennzeichnet, daß die Felge
   (3) zwischen den gewölbten Flanken (7,8) quer und/oder in
   Umfangsrichtung verlaufende Rippen (9) enthält, die etwa
   ebenso hoch wie die Flanken (7,8) sind.

6. Rad nach Anspruch 4, dadurch gekennzeichnet, daß die Felge
   (3) ein mit den gewölbten Flanken (7,8) und den dazwischen
   angeordneten Rippen (9) einstückig geformter Ring ist.

7. Rad nach einem der Ansprüche 4 bis 6, dadurch gekennzeichnet,
   daß die Auflagefläche (20) von einem biegsamen Ring gebildet
   ist, der auf der Außenseite der Felge (3) aufliegt.

8. Rad nach Anspruch 7, dadurch gekennzeichnet, daß der biegsame
   Ring (20) an der Innenseite in die Felge (3) hineinragende
   Rippen (21,22) aufweist.

9. Rad nach Anspruch 7 oder 8, dadurch gekennzeichnet, daß der
   Ring (20) auf den gewölbten Flanken (7,8) und Rippen (9) der
   Felge (3) befestigt ist.

10. Rad nach Anspruch 9, dadurch gekennzeichnet, daß die Felge
    (3) mit dem Ring (20) einen luftdichten Tank bildet und mit
    Überdruckventilen (24,25,28) zum Einlassen und Auslassen von
    Druckluft versehen ist.

11. Rad nach Anspruch 10, dadurch gekennzeichnet, daß die Ventile
    (25,28) druckeinstellbar ausgebildet sind.

12. Rad nach einem der Ansprüche 1 bis 5, dadurch gekennzeichnet,
    daß die Felge (3) ein nach innen offener Profilkörper ist.

13. Rad nach einem der Ansprüche 1 bis 12, dadurch gekennzeichnet,
    daß die gewölbten Flanken (7,8) und damit die Rippen (9) der
    Felge (3) eine Höhe aufweisen, die etwa einem Drittel bis
    etwa zwei Dritteln der Höhe der Seitenflanken (14,15) des
    Luft-Reifens (12) entspricht.

.../3

0149224

14. Rad nach einem der Ansprüche 1 bis 13, dadurch gekennzeichnet, daß die Felge (3) und/oder die ringförmige Auflage (20) aus Kunststoff oder Aluminium besteht.

15. Rad nach einem der Ansprüche 1 bis 13, dadurch gekennzeichnet, daß die gewölbten Flanken (7,8) der Felge (3) auf der Außenseite mit einem Gleitmittel wie Teflon, Silikon und dergleichen belegt sind.

16. Rad nach einem der Ansprüche 1 bis 15, dadurch gekennzeichnet, daß die Wulste (16,17) des Luft-Reifens (12) bei ringförmiger Ausbildung im Querschnitt spitzlappig ausgebildet sind.

G/b

FIG.1

0149224

FIG.2

FIG.5

0149224

0149224

FIG.3

FIG.4

0149224

-4/4-